# EUROPEAN PATENT APPLICATION

(11) **EP 3 429 055 A1**
(43) Date of publication of application: **16.01.2019**
(21) Application number: 18183304.7
(22) Date of filing: 13.07.2018
(51) Int. Cl.: H02J 7/00, H01M 10/48

(54) **INFORMATION PROCESSING APPARATUS AND METHOD FOR FACILITATING REPLACEMENT OF BATTERY**

(30) Priority: 14.07.2017 JP 2017138098
(71) Applicant: Toshiba TEC Kabushiki Kaisha, Tokyo 141-8562 (JP)
(72) Inventor: TERAHARA, Koji, Shinagawa-ku, Tokyo 141-8562 (JP)
(74) Representative: Takeuchi, Maya

(57) **Abstract**

In accordance with an embodiment, an information processing apparatus includes a housing having an insertion slot for a detachable battery, a monitoring device configured to monitor power supplied from an external power source, a charger configured to charge the battery with the supplied from the external power source, and a controller. When the power from the external power source stops, the controller stores data in a volatile memory in a non-volatile memory using power supplied from the battery. The controller also checks a status of the battery, and issues a notification depending on the status of the battery.

## Description

### FIELD

Embodiments described herein relate generally to an information processing apparatus and a method for facilitating replacement of a battery.

### BACKGROUND

A conventional information processing apparatus such as a server device and a personal computer includes an Uninterruptible Power System (UPS) in order to prevent data from being lost at the time of a power failure.

When the power failure occurs, the UPS uses electric power in a battery to store data stored in a volatile storage medium, which cannot hold data if no power is supplied, in a non-volatile storage medium, which can hold the data even if no power is supplied.

The charge of the battery is discharged even if it is not used. Therefore, the information processing apparatus charges the battery every time a certain period elapses. However, if the battery is repeatedly charged, it deteriorates, resulting in decrease in the fully charged capacity. If the fully charged capacity decreases, the power required for the UPS becomes insufficient and the data cannot be stored. Therefore, a maintenance personnel needs to replace the battery of the UPS properly. However, the battery of the UPS is stored inside the information processing apparatus, thereby requiring expert knowledge and skills for the replacement thereof.

There is provided an information processing apparatus comprising: a housing having an insertion slot for a detachable battery; a monitoring device configured to monitor power supplied from an external power source; a charger configured to charge the battery with the power supplied from the external power source; and a controller configured to, when the power from the external power source stops, store data in a volatile memory in a non-volatile memory using power supplied from the battery, wherein the controller is further configured to: check a status of the battery; and issue a notification depending on the status of the battery.

Preferably, the controller issues the notification by turning on an indicator or sending to another device a notification.

Preferably, when the battery is fully charged, the controller determines whether a fully charged capacity of the battery is equal to or lower than a threshold value, and when the fully charged capacity is equal to or lower than the threshold value, the controller turns on the indicator or sends the notification indicating that the battery needs to be replaced.

The information processing apparatus may further comprise a light emitting diode (LED); wherein when the fully charged capacity is equal to or lower than the threshold value, the controller turns on the LED.

The information processing apparatus may further comprise a communication interface configured to connect to the other device; wherein the controller sends via the communication interface the notification that causes the other device to display a message or an icon indicating that the battery needs to be replaced.

Preferably, the fully charged capacity is measured with an IC chip configured to measure a resistance value of the battery.

The information processing apparatus may further comprise: a power supply switch, wherein when the power supply switch is pressed, the controller determines whether the battery is inserted into the insertion slot.

The information processing apparatus may further comprise an LED; wherein when the battery is not inserted into the insertion slot, the controller turns on the LED.

Preferably, when the battery is not inserted into the insertion slot, the controller shuts down the information processing apparatus.

The information processing apparatus may further comprise a communication interface, wherein the controller communicates with a portable terminal via the communication interface.

Preferably, the battery is of a type that is compatible with the portable terminal.

The information processing apparatus may further comprise a boosting circuit configured to boost a voltage of the battery to a voltage required to operate the information processing apparatus.

Preferably, the monitoring device is an uninterruptible power system (UPS).

Preferably, the information processing apparatus is a station connected to at least one of a point-of-sale terminal and an order terminal in an electric order management system.

The present invention further relates to a method performed by an information processing apparatus, the method comprising: charging the battery inserted into an insertion slot of the information processing apparatus with power supplied from an external power source; when the battery is fully charged, determining whether a fully charged capacity of the battery is equal to or lower than a threshold value; and when the fully charged capacity is equal to or lower than the threshold value, issuing a notification indicating that the battery needs to be replaced.

Preferably, the notification is issued by turning on an indicator or sending the notification to another device.

Preferably, the turning on the indicator comprises turning on a light emitting diode disposed in the information processing apparatus.

Preferably, the notification causes the other device to display a message or an icon indicating that the battery needs to be replaced.

The present invention further relates to a method performed by an information processing apparatus configured to communicate with a portable terminal, the method comprising: when the information processing apparatus is switched on, determining whether the battery is inserted into an insertion slot of the information processing apparatus; and when the battery is not inserted into the insertion slot, issuing a notification indicating that the battery is not inserted, and shutting down the information processing apparatus, and when the battery is inserted into the insertion slot, activating the information processing apparatus, and charging the battery with power supplied from an external power source, wherein the battery is of a type that is compatible with the portable terminal.The method may further comprising when the power supply stops, storing data in a volatile memory in a non-volatile memory.

### DESCRIPTION OF THE DRAWINGS

Fig. 1 is a view illustrating an example of an order system according to an embodiment;
Fig. 2 is a perspective view illustrating an appearance of a station;
Fig. 3 is a block diagram illustrating an example of hardware configuration of the station;
Fig. 4 is a block diagram illustrating an example of characteristic functional components of the station;
Fig. 5 is a flowchart for depicting an example of a replacement determination process; and
Fig. 6 is a flowchart for depicting an example of a connection determination process.

### DETAILED DESCRIPTION

In accordance with an embodiment, an information processing apparatus comprises a housing having an insertion slot for a detachable battery, a monitoring device configured to monitor power supplied from an external power source, a charger configured to charge the battery with the supplied from the external power source, and a controller. When the power from the external power source stops, the controller stores data in a volatile memory in a non-volatile memory using power supplied from the battery. The controller also checks a status of the battery, and issues a notification depending on the status of the battery.

Embodiments of the information processing apparatus and a method for facilitating replacement of a battery will be described in detail below with reference to the accompanying drawings. The embodiments described below are one embodiment of the information processing apparatus and the method for facilitating the replacement of the battery, but are not intended to limit the configuration and specification thereof. The information processing apparatus of the present embodiment is an application example to a station of an order system introduced to a restaurant.

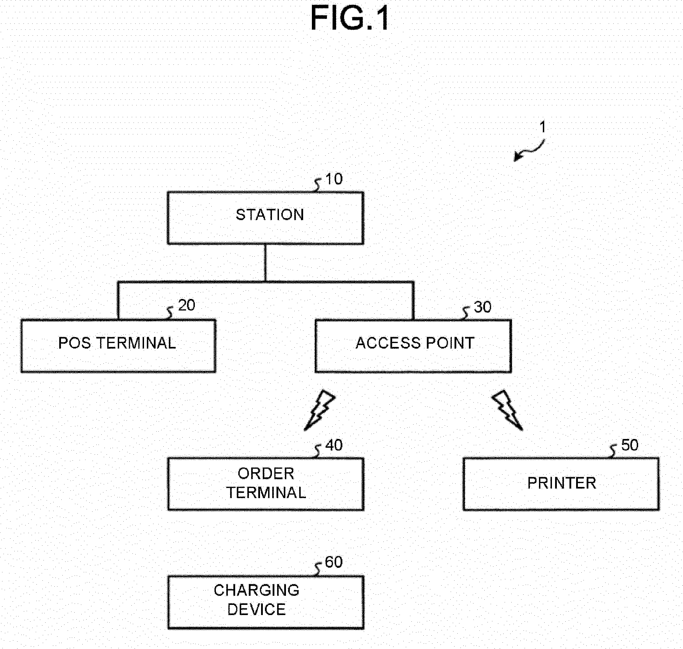

Fig. 1 is a view illustrating an example of an order system 1 according to the present embodiment. The order system 1 is used to receive an order from a customer at a restaurant. The order system 1 comprises a station 10, a Point Of Sales (POS) terminal 20, an access point 30, an order terminal 40, a printer 50, and a charge device 60. The station 10, the POS terminal 20, and the access point 30 are communicably connected via a network such as a wired Local Area Network (LAN). The access point 30 is communicably connected to the order terminal 40 and the printer 50 via a wireless LAN or the like. The order system 1 shown in Fig. 1 comprises one device for each of respective devices included in the order system 1; however, plural devices for each one of respective devices may be included. The order system 1 may not include the POS terminal 20, the access point 30, the printer 50, and the charge device 60.

The station 10 is an information processing apparatus such as a server or a personal computer. The station 10 collectively controls respective devices of the order system 1. For example, the station 10 stores various information received from respective devices of the order system 1. The station 10 transmits various kinds of information to respective devices of the order system 1. The station 10 is provided with a UPS.

The POS terminal 20 is a sales data processing apparatus that executes a checkout process on foods and drinks provided to a customer. The POS terminal 20 executes the checkout process based on the information transmitted from the station 10.

The access point 30 is a relay device for relaying communication. For example, the access point 30 relays the communication between the station 10 and the order terminal 40. The access point 30 relays the communication between the station 10 and the printer 50.

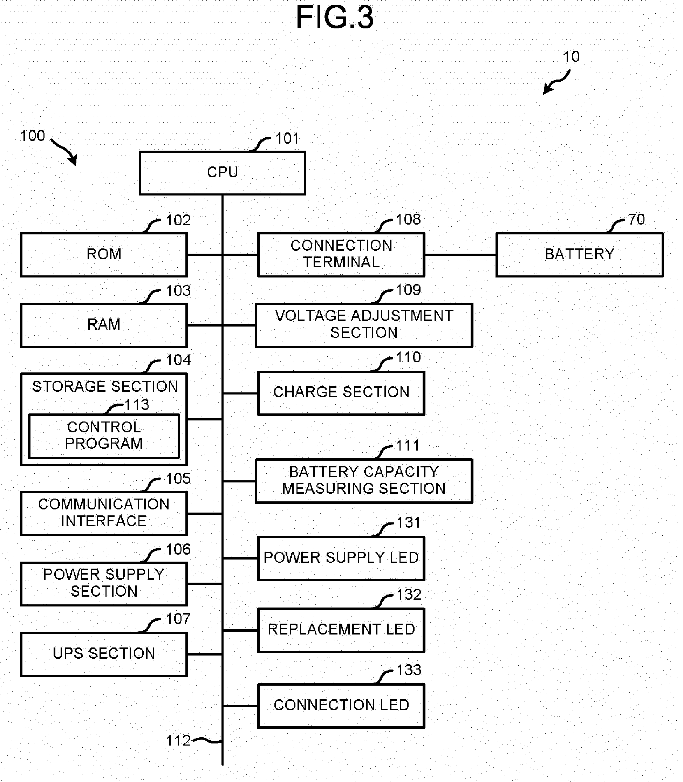

The order terminal 40 is a portable terminal. The order terminal 40 receives an input of order contents such as meals ordered by the customer. Then, the order terminal 40 transmits the order contents to the station 10 if the order contents are confirmed. The order terminal 40 includes a battery 70 (refer to Fig. 3) that supplies electric power to each part of the order terminal 40. The battery 70 is detachable from the order terminal 40.

For example, the printer 50 is installed in a kitchen or the like. For example, if the printer 50 receives the order contents of the customer transmitted from the station 10, the printer 50 prints the received order contents. A cook prepares meals indicated by the printed order contents.

The charge device 60 is used for charging the battery 70 of the order terminal 40.

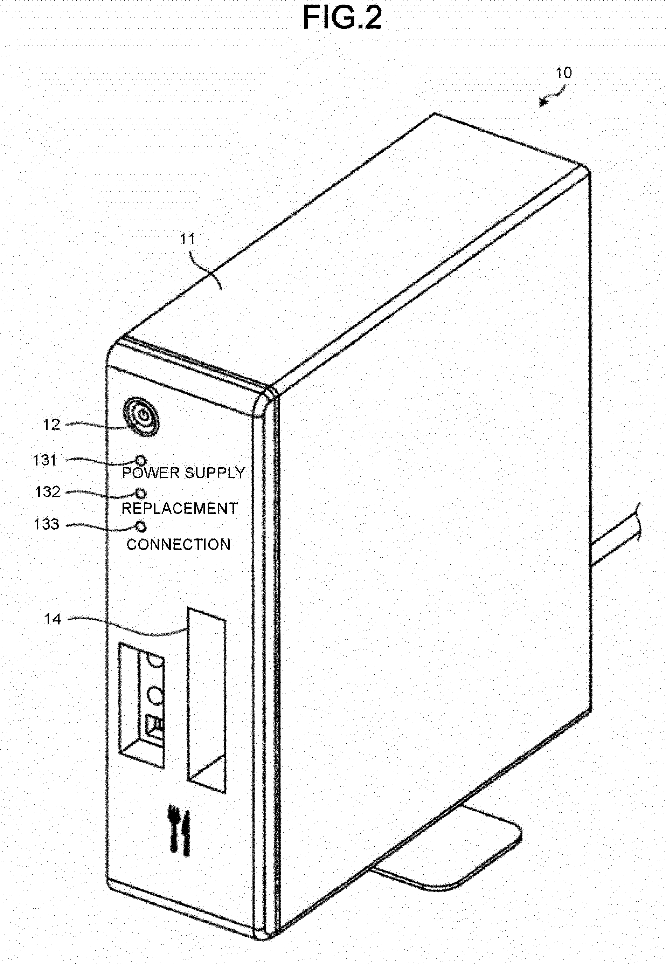

Next, the appearance of the station 10 is described. Here, Fig. 2 is a perspective view illustrating the appearance of the station 10.

The station 10 is provided with a substantially cubic housing 11. The housing 11 is an exterior cover for covering the station 10. At the front surface of the housing 11, the station 10 includes a power supply switch 12, a power supply Light Emitting Diode (LED) 131, a replacement LED 132, a connection LED 133, and a battery insertion slot 14. The station 10 may include the power supply switch 12, the power supply LED 131, the replacement LED 132, the connection LED 133 and the battery insertion slot 14 on a surface other than the front surface of the housing 11.

The power supply switch 12 is used for turning on the power supply of the station 10. The station 10 is activated if the power supply is turned on by the power supply switch 12.

The power supply LED 131 is used for indicating that the power supply is turned on. For example, the power supply LED 131 lights up if the station 10 is powered on. The replacement LED 132 is used for indicating a replacement time of the battery 70 (refer to Fig. 3) used for the UPS. For example, the replacement LED 132 lights up when the replacement time of the battery 70 is reached. The connection LED 133 is used for indicating whether the battery 70 is connected to a connection terminal 108 (refer to Fig. 3) provided in the battery insertion slot 14. For example, the connection LED 133 lights up when the battery 70 is connected to the connection terminal 108.

The battery insertion slot 14 is an insertion slot into which the battery 70 used for the UPS is detachably inserted. For example, the battery insertion slot 14 is an opening provided in the housing 11. The battery insertion slot 14 receives the insertion of the battery 70 pushed in the battery insertion slot 14. The battery insertion slot 14 has the connection terminal 108 therein. The battery 70 is then connected to the connection terminal 108 by being inserted into the battery insertion slot 14. The battery insertion slot 14 discharges the battery 70 by pulling the battery 70 out of the battery insertion slot 14. In the battery insertion slot 14, the battery 70 is not limited to being connected to the connection terminal 108 by being pushed in, and the battery 70 may be connected to the connection terminal 108 through a conveyance section for conveying the battery 70. The battery insertion slot 14 may discharge the battery 70 if a discharge switch is pressed. Furthermore, the battery insertion slot 14 may be provided with a lid capable of closing the opening.

Next, the hardware configuration of the station 10 is described.

Fig. 3 is a block diagram illustrating an example of a hardware configuration of the station 10. The station 10 includes a controller 100, a storage section 104, a communication interface 105, a power supply section 106, a UPS section 107, a connection terminal 108, a voltage adjustment section 109, a charge section (charger) 110, a battery capacity measuring section 111, a power supply LED 131, a replacement LED 132, and a connection LED 133. These sections are mutually connected via a system bus 112 such as a data bus and an address bus.

The controller 100 is a computer that controls the overall operation of the station 10 to realize various functions of the station 10. The controller 100 includes a Central Processing Unit (CPU) 101, a Read Only Memory (ROM) 102, and a Random Access Memory (RAM) 103. The CPU 101 collectively controls the operation of the station 10. The ROM 102 stores various programs and data. The RAM 103 temporarily stores various programs and various data. Then, the CPU 101 executes programs stored in the ROM 102 or the storage section 104 with the RAM 103 as a work area or working area.

The RAM 103 is an example of a volatile memory. The RAM 103 is a volatile storage medium that holds data on condition that the electric power is supplied. In other words, the RAM 103 cannot hold the data unless the electric power is supplied.

The storage section 104 is a Hard Disk Drive (HDD), a Solid State Drive (SSD) or the like. The storage section 104 stores a control program 113. The control program 113 is an operating system or a program executed to realize functions of the station 10. The control program 113 includes a program used for realizing the characteristic functions according to the present embodiment.

The storage section 104 is an example of a non-volatile memory. The storage section 104 is a non-volatile storage medium that holds the data even when no power is supplied.

The communication interface 105 communicates with the POS terminal 20 via a network. The communication interface 105 communicates with the order terminal 40 and the printer 50 via the network and the access point 30.

The power supply section 106 receives the electric power from an external power supply provided outside the station 10. The power supply section 106 supplies the electric power to each section of the station 10.

The UPS section 107 is an example of a monitoring device. The UPS section 107 monitors whether the electric power is supplied from the power supply section 106. The UPS section 107 switches a supply source for supplying the electric power to each section of the station 10 from the power supply section 106 to the battery 70 on condition that no power is supplied from the power supply section 106.

The connection terminal 108 connects the battery 70 inserted from the battery insertion slot 14 and the station 10 in a detachable manner.

The battery 70 is a rechargeable secondary battery such as a lithium ion battery. For example, the battery 70 supplies the electric power used in a UPS process for storing the data stored in a volatile storage medium such as the RAM 103 in a non-volatile storage medium such as the storage section 104 if no power is supplied from the power supply section 106. The battery 70 may also be used for various devices of the order system 1. For this reason, the battery 70 of the station 10 is compatible with the order terminal 40. The battery 70 may also be used by other devices other than the order terminal 40. In the other devices, the battery 70 is not limited to being used for the UPS process, and may be used for other normal processes.

The voltage adjustment section 109 adjusts the voltage of the electric power supplied from the battery 70. For example, the voltage adjustment section 109 is a boosting circuit that boosts the voltage of the battery 70. The battery 70 is compatible with other devices such as the order terminal 40. Here, since the order terminal 40 is a portable terminal for inputting an order by a customer, the order terminal 40 can be driven with a low voltage. On the other hand, since the station 10 functions as a server device, the station 10 cannot be driven with the same voltage as the order terminal 40. Since the battery 70 is mainly used by the order terminal 40, the voltage is low, and thus the voltage is not high enough for the station 10 to perform the UPS process. Therefore, the voltage adjustment section 109 boosts the voltage of the battery 70.

The charge section 110 is an example of a charger. The charge section 110 is used for charging the battery 70 with the electric power supplied from the power supply section 106.

The battery capacity measuring section 111 measures the capacity of the battery 70. For example, the battery capacity measuring section 111 is an Integrated Circuit (IC) chip. For example, the battery capacity measuring section 111 measures the capacity of the battery 70 by measuring a resistance of the battery 70 or the like.

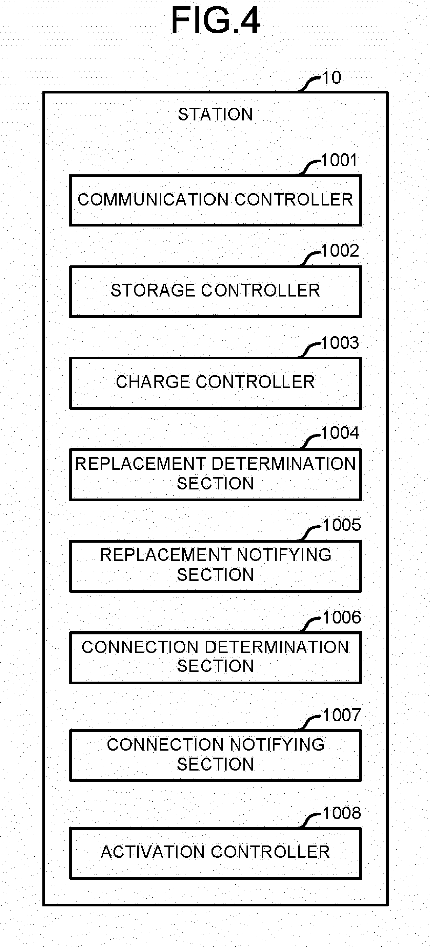

The characteristic functions of the station 10 are described below. Fig. 4 is a block diagram illustrating an example of characteristic functional components of the station 10.

The controller 100 of the station 10 copies or decompresses the control program 113 stored in the storage section 104 on the RAM 103 and executes the control program 113 to generate respective functional sections shown in Fig. 4 on the RAM 103. Specifically, the controller 100 of the station 10 includes, as functional sections, a communication controller 1001, a storage controller 1002, a charge controller 1003, a replacement determination section 1004, a replacement notifying section 1005, a connection determination section 1006, a connection notifying section 1007, and an activation controller 1008.

The communication controller 1001 controls the communication interface 105 to execute communication via the network. For example, the communication controller 1001 executes communication with the POS terminal 20 and the access point 30. The communication controller 1001 executes communication with the order terminal 40 and the printer 50 via the access point 30.

The storage controller 1002 stores the data stored in the volatile storage medium such as the RAM 103 in the non-volatile storage medium such as the storage section 104 if the UPS section 107 detects the stop of power supplied from the power supply section 106.

The charge controller 1003 controls the battery capacity measuring section 111 to measure the capacity of the battery 70. For example, the charge controller 1003 charges the battery 70 with the electric power supplied from the power supply section 106 if the remaining capacity becomes equal to or lower than a charge threshold value. The charge controller 1003 may also charge the battery 70 with the electric power supplied from the power supply section 106 every time a certain period elapses, and is not limited to charging the battery 70 only when the remaining capacity is equal to or lower than the charge threshold value. For example, the charge controller 1003 may start charging the battery 70 any time after the station 40 is turned on.

The replacement determination section 1004 controls the battery capacity measuring section 111 to determine whether to replace the battery 70. Here, by repeatedly charging the battery 70, the fully charged capacity thereof may decrease. The replacement determination section 1004 determines that it is necessary to replace the battery 70 if the fully charged capacity of the battery 70 becomes equal to or lower than a replacement threshold value.

The replacement notifying section 1005 is an example of a notifying section. The replacement notifying section 1005 makes notification if the replacement determining section 1004 determines that it is necessary to replace the battery 70. For example, the replacement notifying section 1005 notifies that it is necessary to replace the battery 70 by lighting the replacement LED 132. The replacement notifying section 1005 makes notification by sending a replacement request to the external device indicating that it is necessary to replace the battery 70. For example, the external device is the POS terminal 20 or the order terminal 40. Then, when receiving the replacement request, the external device makes notification by displaying a screen, a message, an icon, or the like indicating that it is necessary to replace the battery 70 on the display section.

The connection determining section 1006 determines whether the battery 70 is connected to the connection terminal 108. For example, the connection determining section 1006 determines whether the battery 70 is connected to the connection terminal 108 by measuring a state of a switch to be pressed when the battery 70 provided in the battery charge section 14 is inserted or by measuring an electrical state of the connection terminal 108.

The connection notifying section 1007 makes notification if the connection determination section 1006 determines that the battery 70 is not connected to the connection terminal 108. For example, the connection notifying section 1007 informs that the battery 70 is not connected to the connection terminal 108 by lighting the connection LED 133.

The activation controller 1008 controls an activation process for activating the station 10. For example, the activation controller 1008 activates the station 10 by performing the activation process if the power supply switch 12 is pressed. However, the activation controller 1008 interrupts the activation process if the connection determination section 1006 determines that the battery 70 is not connected to the connection terminal 108, and then performs shutdown for stopping the station 10. In this way, the activation controller 1008 prevents the station 10 from being used while the battery 70 is not connected to the connection terminal 108 by shutting the station 10 down if the battery 70 is not connected to the connection terminal 108.

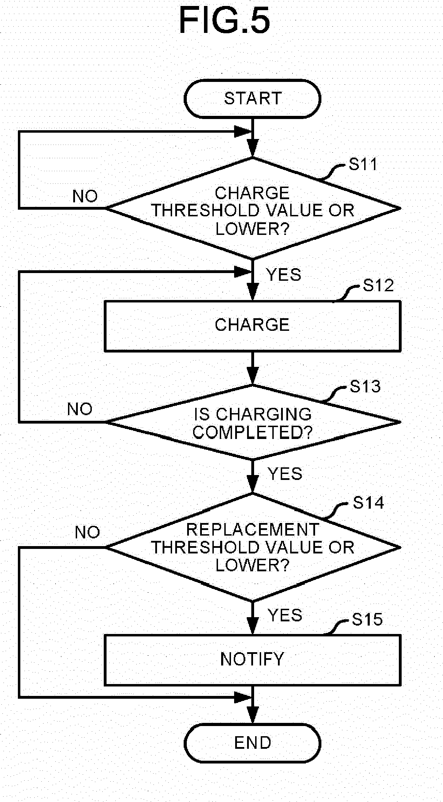

The replacement determination process executed by the station 10 is described below. Fig. 5 is a flowchart for depicting an example of the replacement determination process executed by the station 10 according to the present embodiment.

The charge controller 1003 determines whether the remaining capacity of the battery 70 is equal to or lower than the charge threshold value (Act S11). The charge controller 1003 stands by if the capacity is larger than the charge threshold value (No in Act S11).

On the other hand, the charge controller 1003 charges the battery 70 (Act S12) if the remaining capacity is equal to or lower than the charge threshold value (Yes in Act S11). The charge controller 1003 determines whether the battery 70 is fully charged (Act S13). The charge controller 1003 proceeds to the process in Act S12 if the battery 70 is not fully charged (No in Act S13).

If the battery 70 is fully charged (Yes in Act S13), the replacement determining section 1004 determines whether the fully charged capacity of the battery 70 is equal to or lower than the replacement threshold value (Act S14). The station 10 terminates the replacement determination process if the fully charged capacity of the battery 70 is larger than the replacement threshold (No in Act S14).

The replacement notifying section 1005 sends to another device a notification that it is necessary to replace the battery 70 (Act S15) if the fully charged capacity of the battery 70 is equal to or lower than the replacement threshold value (Yes in Act S14).

As described above, the station 10 terminates the replacement determination process.

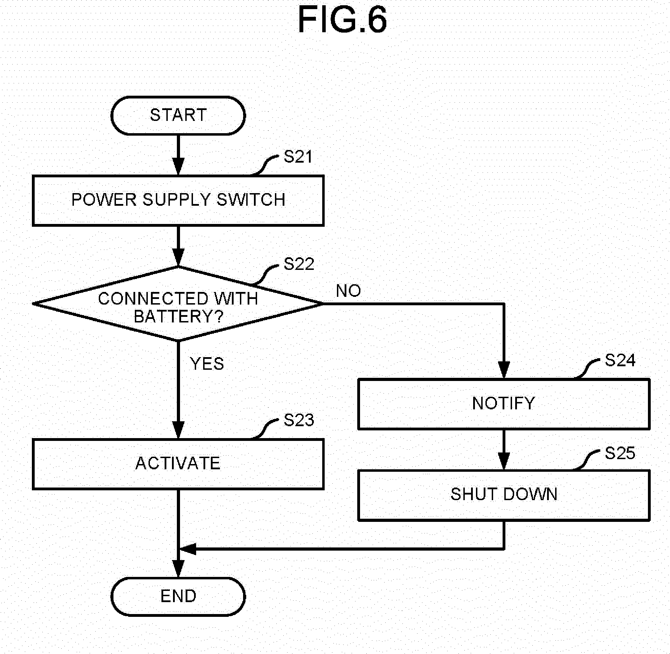

Next, the connection determination process executed by the station 10 is described. Fig. 6 is a flowchart for depicting an example of a connection determination process executed by the station 10 according to the present embodiment.

The activation controller 1008 detects press of the power supply switch 12 (Act S21).

The activation controller 1008 determines whether the battery 70 and the connection terminal 108 are connected (Act S22) .

The activation controller 1008 activates the station 10 (Act S23) if the battery 70 and the connection terminal 108 are connected (Yes in Act S22).

On the other hand, the connection notifying section 1007 notifies that the battery 70 is not connected (Act S24) if the battery 70 and the connection terminal 108 are not connected (No in Act S22).

The activation controller 1008 interrupts the activation process and performs showdown to stop the station 10 (Act S25) .

As described above, the station 10 terminates the connection determination process.

As described above, according to the station 10 of the present embodiment, the station 10 is provided with the battery insertion slot 14 in the housing 11. Thus, a user can replace the battery 70 by pulling out the battery 70 inserted into the battery insertion slot 14 and then inserting a new battery 70 into the battery insertion slot 14. Therefore, the station 10 can facilitate the replacement of the battery 70 for the UPS. In addition, the station 10 uses the battery 70 of the order terminal 40 in which the battery 70 is frequently replaced as the battery 70 of the UPS. Therefore, the user does not need to separately prepare a battery for UPS.

While certain embodiments have been described, these embodiments have been presented by way of example only, and are not intended to limit the scope of the invention. Indeed, the novel embodiments described herein may be embodied in a variety of other forms; furthermore, various omissions, substitutions and changes in the form of the embodiments described herein may be made without departing from the scope of the invention. The accompanying claims and their equivalents are intended to cover such forms or modifications as would fall within the scope of the invention.

The programs executed by each device of the foregoing embodiment and modification may be incorporated into a storage medium (i.e., ROM or storage section) of each device to be provided; however, the present invention is not limited to this . The programs may be recorded in a computer-readable recording medium such as a CD-ROM, a Flexible Disk (FD), a CD-R, a Digital Versatile Disk (DVD) and the like in the form of installable or executable file to be provided. Further, the storage medium is not limited to a medium independent of a computer or an embedded system, and also contains a storage medium that stores or temporarily stores the programs by downloading the programs transmitted via a LAN or an Internet.

Further, the programs executed by each device of the foregoing embodiment and modification may be provided by being stored in a computer connected with a network such as the Internet and downloaded via the network, or may be provided or distributed via the network such as the Internet.

## Claims

1. An information processing apparatus (1) comprising:
a housing (11) having an insertion slot (14) for a detachable battery (70);
a monitoring device (107) configured to monitor power supplied from an external power source;
a charger (110) configured to charge the battery with the power supplied from the external power source; and
a controller (100) configured to, when the power from the external power source stops, store data in a volatile memory in a non-volatile memory using power supplied from the battery, wherein
the controller is further configured to:
measure the capacity of the battery; and
issue a notification depending on the capacity of the battery.

2. The information processing apparatus according to claim 1, wherein
the controller issues the notification by turning on an indicator or sending to another device a notification.

3. The information processing apparatus according to claim 2, wherein
when the battery is fully charged, the controller determines whether a fully charged capacity of the battery is equal to or lower than a threshold value, and
when the fully charged capacity is equal to or lower than the threshold value, the controller turns on the indicator or sends the notification indicating that the battery needs to be replaced.

4. The information processing apparatus according to claim 3, further comprising
a light emitting diode (LED); wherein
when the fully charged capacity is equal to or lower than the threshold value, the controller turns on the LED.

5. The information processing apparatus according to claim 3 or 4, further comprising
a communication interface configured to connect to the other device; wherein
the controller sends via the communication interface the notification that causes the other device to display a message or an icon indicating that the battery needs to be replaced.

6. The information processing apparatus according to any one of claims 3 to 5, wherein
the fully charged capacity is measured with an IC chip configured to measure a resistance value of the battery.

7. The information processing apparatus according to claim 2, further comprising
a power supply switch, wherein
when the power supply switch is pressed, the controller determines whether the battery is inserted into the insertion slot.

8. The information processing apparatus according to claim 7, further comprising
an LED; wherein
when the battery is not inserted into the insertion slot, the controller turns on the LED.

9. The information processing apparatus according to claim 8, wherein
when the battery is not inserted into the insertion slot, the controller shuts down the information processing apparatus.

10. The information processing apparatus according to any one of claims 1 to 9, further comprising
a communication interface, wherein
the controller communicates with a portable terminal via the communication interface.

11. The information processing apparatus according to claim 10, wherein
the battery is of a type that is compatible with the portable terminal.

12. The information processing apparatus according to claim 11, further comprising
a boosting circuit configured to boost a voltage of the battery to a voltage required to operate the information processing apparatus.

13. The information processing apparatus according to any one of claims 1 to 12, wherein
the monitoring device is an uninterruptible power system (UPS) .

14. The information processing apparatus according to any one of claims 1 to 13, wherein
the information processing apparatus is a station connected to at least one of a point-of-sale terminal and an order terminal in an electric order management system.

15. A method performed by an information processing apparatus, the method comprising:
charging the battery inserted into an insertion slot of the information processing apparatus with power supplied from an external power source;
when the battery is fully charged, determining whether a fully charged capacity of the battery is equal to or lower than a threshold value; and
when the fully charged capacity is equal to or lower than the threshold value, issuing a notification indicating that the battery needs to be replaced.
